**Europäisches Patentamt**

**European Patent Office**

**Office européen des brevets**

(19)

(11) Veröffentlichungsnummer: **0 048 403**
**B1**

(12)

# EUROPÄISCHE PATENTSCHRIFT

(45) Veröffentlichungstag der Patentschrift:
26.02.86

(21) Anmeldenummer: 81107121.6

(22) Anmeldetag: 10.09.81

(51) Int. Cl.⁴: **B 62 K 19/20**

(54) Verfahren zum Verbinden von metallenen Profilteilen durch Löten.

(30) Priorität: 18.09.80 DE 3035187

(43) Veröffentlichungstag der Anmeldung:
31.03.82 Patentblatt 82/13

(45) Bekanntmachung des Hinweises auf die Patenterteilung:
26.02.86 Patentblatt 86/9

(84) Benannte Vertragsstaaten:
**BE FR GB IT NL**

(56) Entgegenhaltungen:
**CH - A - 193 510**
**GB - A - 651 763**
**US - A - 3 860 265**

**SCHWEISSEN UND SCHNEIDEN, Band 13, Nr. 4, 1961,
Seiten 146-151, Düsseldorf, DE. DR.E.A.
OTTO:"BUCKELSCHWEISSEN VERKÜRZT STÜCKZEI-
TEN"**
**AUTOMATIC WELDING, Band 28, Nr. 4, April 1975,
Seiten 48-49, Cambridge, G.B.**

(73) Patentinhaber: **ELGA Elektro- und Gasapparatebau
GmbH, Am Grubenstollen 11, D-6670 St. Ingbert (DE)**

(72) Erfinder: **Baumann, Wolfgang, Zum Stadion 37,
D-4018 Langenfeld (DE)**

## Beschreibung

Die Erfindung betrifft ein Verfahren zum Verbinden von metallenen Profilteilen, insbesondere für Fahrradrahmen, von denen an der Verbindungsstelle mindestens ein Teil an die Form des anderen Teils zur Bildung eines Spaltes mit im Wesentlichen gleich großer Spaltbreite angepaßt wird und die anschließend miteinander verlötet werden.

Fahrradrahmen bestehen in der Regel aus mehreren Rohren, die in Muffen stecken und hier eingelötet sind, die ihrerseits in Lagergehäusen für den Steuerkopf und für das Tretlager und im Klemmstück für die Sattelstütze eingeformt sind. Die Lagergehäuse und das Klemmstück sind wegen der durch einen Ziehvorgang anzuformenden Muffen in der Herstellung und wegen des erforderlichen ziehfähigen Materials teuer. Da die Festigkeit einer Verbindung von der Genauigkeit des Lötspaltes abhängt, ist es erforderlich, enge Toleranzen für die Rohre und die Muffen einzuhalten. Enge Toleranzen bedeuten aber hohe Kosten. Wegen der einzuhaltenden engen Toleranzen ist auch das Zusammenstecken der Einzelteile aufwendig und macht es erforderlich, daß die Rohrenden zum leichteren Einstecken angekuppt werden. Die Muffen haben den weiteren Nachteil, daß sie eine verhältnismäßig lange Anwärmzeit und Lötzeit sowie viel Lot und Flußmittel für eine einwandfreie Verbindung benötigen. Die längere und grossflächigere Erwärmung beim Verlöten der Muffen führt auch dazu, daß sich der Rahmen verzieht und sehr stark verzundert. Es ist deshalb erforderlich, die einzelnen Rahmenteile fest einzuspannen und später nachzurichten.

Die US-A-3 860 265 zeigt einen Fahrradrahmen, bestehend aus mehreren, an ihren Verbindungsstellen durch Löten miteinander verbundenen Teilen, wobei zumindest ein Teil der Verbindungsstellen stumpf geschweißt bzw. gelötet ist. Für die Herstellung solcher Stumpflötungen sind allerdings aufwendige Vorrichtungen notwendig, um einen gleichmäßigen Lötspalt zu gewährleisten, der für eine ausreichende Festigkeit der Lötverbindungen erforderlich ist.

Der Erfindung liegt die Aufgabe zugrunde, ein Verfahren zum Verbinden von Profilen, insbesondere für Fahrradrahmen zu schaffen, das mit geringerem Arbeits- und Materialaufwand als das bekannte Verfahren durchgeführt werden kann.

Diese Aufgabe wird erfindungsgemäß bei einem Verfahren der eingangs genannten Art dadurch gelöst, daß die miteinander zu verlötenden Teile zunächst durch Buckelwiderstandsschweißen aneinander geheftet werden und daß die Teile anschließend in dem Bereich zwischen bzw. neben den Buckeln stumpf gelötet werden.

Wird das erfindungsgemäße Verfahren zur Herstellung von Rahmen für Fahrräder angewendet, entfallen die sonst üblichen teuren Muffen. Das bedeutet, daß es auch keine wegen der Passung von Muffe und Rohren einzuhaltenden engen Toleranzen mehr gibt. Da ziehfähige Muffenwerkstoffe nicht mehr notwendig sind, kann für die Lagergehäuse billigerer Werkstoff verwendet werden. Da nur noch die sich auf eine schmale Spaltbreite konzentrierenden Stoßstellen zu löten sind, wird weniger Flussmittel und Material benötigt. Aus dem gleichen Grunde verringern sich auch die Lötzeit und der Energiebedarf. Auch kommt es nicht zu einem Verziehen des Rahmens, so daß auch das Nachrichten entfällt. Während des Lötens brauchen die einzelnen Rahmenteile auch nicht in einer Spannvorrichtung gehalten zu werden. Die geschweißten Heftstellen genügen, den Rahmen während des Lötvorganges in Form zu halten. Der Wegfall der Muffen hat auch Vorteile beim Gebrauch des Rahmens, weil damit eine Gewichtseinsparung verbunden ist, die besonders bei hochwertigen Rennrädern besonders zum Tragen kommt.

Die Buckel können bei oder nach dem Herstellen der Passung des einen Teils angebracht werden. Dabei können die Buckel aus dem Profilmaterial des einen Teils herausgearbeitet oder aufgeschweißt werden, z.B. in einem Schweißverfahren mit abschmelzender Elektrode.

Es hat sich als zweckmäßig erwiesen, wenn das eine Teil mehrere Buckel trägt. Dadurch wird ein Abheben des einen Teils und damit ein unterschiedlich breiter Lötspalt verhindert.

Bei mehreren Verbindungsstellen eines Rahmens können diese nacheinander, aber auch gleichzeitig, durch Buckelschweißen geheftet werden. Vor dem Löten sollten sämtliche Verbindungsstellen geheftet sein.

Das erfindungsgemäße Verfahren ist besonders geeignet, um maschinell in mehreren Takten durchgefürt zu werden.

Mit dem erfindungsgemäßen Verfahren erhält man einen Rahmen, insbesondere Fahrradrahmen, bestehend aus mehreren an ihren Verbindungsstellen durch Löten miteinander verbundenen Teilen, insbesondere Rohren, bei dem die Teile an den Verbindungsstellen in der Form einander angepaßte muffenlose Stöße bilden und buckelwiderstandsverschweißt und stumpfgelötet sind.

Im folgenden wird die Erfindung anhand eines Ausführungsbeispiels näher erläutert. Im einzelnen zeigen

Fig. 1 einen Fahrradrahmen in Seitenansicht,

Fig. 2 zwei miteinander zu verbindende Rohre vor dem Buckelwiderstandsverschweißen und

Fig. 3 eine durch Buckelwiderstandsschweißen und Stumpflöten hergestellte Verbindungsstelle.

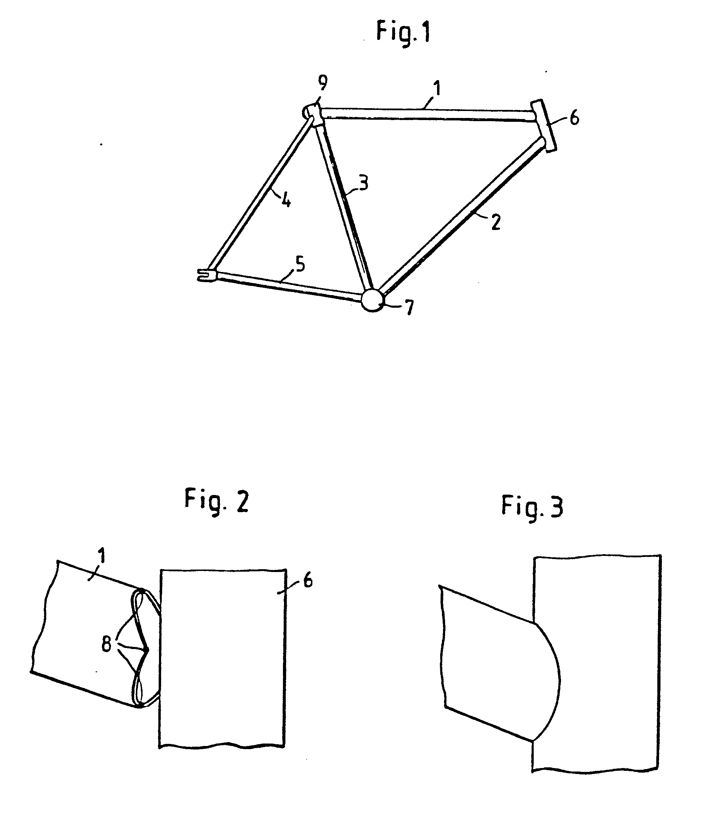

Der in Fig. 1 dargestellte Rahmen besteht aus drei im Dreieck angeordneten Rohren 1, 2, 3 und einer am hinteren Rohr 3 angesetzten, doppelarmigen Hinterradgabel 4, 5. Das Rohr 1 ist mit einer Sattelmuffe 9 durch Buckelschweißung und Stumpflötung verbunden. Das Rohr 3 wird nach dem Einschieben in die Sattelmuffe 9 in bisher üblicher Art gelötet, während die Rohre 1 und 2 einerseits und die Rohre 2 und 3 andererseits über jeweils ein aus einem Rohrstück bestehendes Gehäuse 6, 7 für den Steuerkopf bzw. für das Tretlager mittelbar verbunden sind. Die Rohre 1, 2, 3 sind an die Gehäuse 6, 7 durch Buckelwiderstandsschweißen und Stumpflöten angeschlossen. Die Gabel 4, 5 kann in der gleichen Art und Weise mit dem Rohr 3 bzw. dem Gehäuse 7 verbunden sein. Sie kann aber auch, wie bisher, mit der Sattelmuffe 9 verlötet sein.

Fig. 2 zeigt, daß die miteinander zu verbindenden Rohre, z.B. das Rohr 1 und das als Gehäuse dienende Rohrstück 6, in der Form angepaßt sind, so daß das Rohr 1 an der Stoßstelle der Außenkontur des Rohrstückes 6 entspricht. Auf seiner Stirnseite trägt das Rohr 1 Buckel 8 oder Warzen, die aus dem Material des Rohres bei der Herstellung der angepaßten Kontur herausgearbeitet sein können oder danach aufgeschweißt werden. Über den Umfang der angepaßten Kontur sind mehrere derartige Buckel vorgesehen. Nachdem das Rohr 1 an der Stirnseite diese Form erhalten hat, wird es gegen das Rohrstück 6 gedrückt und durch Widerstandsschweißen an den Stellen der Buckel 8 mit dem Rohrstück 6 verbunden. Jetzt können die beiden Teile 1, 6 durch Löten miteinander über die gesamte Länge des Spaltes verbunden werden.

Fig. 3 zeigt die miteinander verbundenen Teile.

In der gleichen Weise können die übrigen Teile des Rahmens an den Verbindungsstellen miteinander verbunden werden. Es ist möglich, daß zunächst sämtliche Rahmenteile buckelwiderstandsverschweißt werden und anschliessend verlötet werden.

## Patentansprüche:

1. Verfahren zum Verbinden von metallenen Profilteilen, insbesondere für einen Fahrradrahmen, von denen an der Verbindungsstelle mindestens ein Teil an die Form des anderen Teils zur Bildung eines Spaltes mit im wesentlichen gleich großer Spaltbreite angepaßt wird und die anschließend miteinander verlötet werden, *dadurch gekennzeichnet,* daß die miteinander zu verlötenden Teile zunächst durch Buckelwiderstandsschweißen aneinandergeheftet werden und daß die Teile anschließend in dem Bereich zwischen bzw. neben den Buckeln stumpfgelötet werden.

2. Verfahren nach Anspruch 1, *dadurch gekennzeichnet,* daß bei oder nach der Herstellung der Passung an der Stoßstelle das eine Teil Buckel (Warzen) für das Buckelwiderstandsschweißen erhält.

3. Verfahren nach Anspruch 1 oder 2, *dadurch gekennzeichnet.* daß die Buckel aus dem Profilmaterial herausgearbeitet werden.

4. Verfahren nach Anspruch 1 oder 2, *dadurch gekennzeichnet,* daß die Buckel aufgeschweißt werden.

5. *Verfahren nach einem der Ansprüche 1 bis 4, dadurch gekennzeichnet,* daß bei mehreren Verbindungsstellen eines Rahmens aus metallenen Profilteilen vor dem Löten sämtliche Verbindungsstellen durch Buckelwiderstandsschweißen aneinandergeheftet werden.

## Claims

1. A process for connecting metal profile parts, particularly for a bicycle frame, the connecting point of at least one part thereof being adapted to the shape of the other part to form a gap with a substantially constant gap width, the parts then being soldered together, characterised in that the parts to be soldered together are firstly joined together by resistance welding of projections and in that the parts are then butt-welded in the area between or next to the projections.

2. A process according to claim 1, characterised in that during or after production of the fit on the joint, one part receives projections (warts) for the projection resistance welding.

3. A process according to claim 1 or 2, characterised in that the projections are produced from the material of the profile parts.

4. A process according to claim 1 or 2, characterised in that the projections are welded on.

5. A process according to one of claims 1 to 4, characterised in that in the case of several joints on a frame of metal profile parts, numerous joints are joined together before soldering by projection resistance welding.

## Revendications

1. Procédé pour fixer l'une à l'autre des pièces profilées, en particulier pour un cadre de bicyclette dont une partie au moins est adaptée au point de liaison à la forme de l'autre partie pour la formation d'une fente, la largeur de la fente étant sensiblement constante, les pièces étant ensuite soudées ensemble, procédé caractérisé en ce que les pièces qui doivent être soudées ensemble sont d'abord pointées l'une sur l'autre par une soudure grâce à la résistance de bossages, et que ces parties sont ensuite soudées bord à bord dans la zone entre et à côté des bossages.

2. Procédé suivant la revendication 1, caractérisé en ce que, au cours ou après la préparation de l'adaptation au point de rencontre, l'une des parties reçoit des bossages (boutons) pour la soudure grâce à la résistance sur les bossages.

3. Procédé suivant l'une quelconque des revendications 1 et 2, caractérisé en ce que les bossages sont façonnés à partir de la matière profilée.

4. Procédé suivant l'une quelconque des revendications 1 ou 2, caractérisé en ce que les bossages sont rechargés par soudures.

5. Procédé suivant l'une quelconque des revendications 1 à 4, caractérisé en ce que, aux nombreux points de fixation d'un cadre constitué de pièces métalliques profilées, tous les points de liaison sont pointés par soudage grâce à la résistance des bossages.

4

# Fig.1

# Fig. 2

# Fig. 3